(19) Europäisches Patentamt
European Patent Office
Office européen des brevets

(11) **EP 1 130 126 B1**

(12) **EUROPÄISCHE PATENTSCHRIFT**

(45) Veröffentlichungstag und Bekanntmachung des Hinweises auf die Patenterteilung:
**02.02.2005 Patentblatt 2005/05**

(51) Int Cl.[7]: **C22C 38/24**, C22C 38/04, B23D 61/02

(21) Anmeldenummer: **01890048.0**

(22) Anmeldetag: **27.02.2001**

(54) **Stammblatt für Dünnschnitt-Kreissägen**

Blade body for thin circular saws

Corps de lame pour scies circulaires minces

(84) Benannte Vertragsstaaten:
**AT BE CH CY DE DK ES FI FR GB GR IE IT LI LU MC NL PT SE TR**

(30) Priorität: **29.02.2000 AT 3192000**
**30.01.2001 AT 1532001**

(43) Veröffentlichungstag der Anmeldung:
**05.09.2001 Patentblatt 2001/36**

(73) Patentinhaber: **Böhler Miller Messer und Sägen GmbH**
**3333 Böhlerwerk (AT)**

(72) Erfinder: **Frey, Lambert**
**3131 Getzersdorf 123 (AT)**

(74) Vertreter: **Wildhack, Helmut, Dr. Dipl.-Ing.**
**Patentanwälte Wildhack - Jellinek**
**Landstrasser Hauptstrasse 50**
**1030 Wien (AT)**

(56) Entgegenhaltungen:
**EP-A- 0 931 615      DD-A- 290 446**
**DE-A- 19 519 060      DE-A- 19 801 121**
**US-A- 3 663 316       US-A- 4 979 417**

- **C.W. WEGST: "Stahlschlüssel" 1986 , VERLAG STAHLSCHLÜSSEL WEGST GMBH , MARBACH, DEUTSCHLAND XP002239962 * Seite 89 ***

**Beschreibung**

Die Erfindung betrifft ein Stammblatt für Dünnschnitt-Kreissägen aus einer Eisenbasislegierung mit guten Löteigenschaften, welches umfangseitig mit Schneidsegmenten aus Sinterwerkstoff bestückt ist und im Blattmittelbereich ein Verlaufen des Schnittes hindernde Spannungen aufweist, zum Bearbeiten von nichtmetallischen Hartstoffen, insbesondere von Steinmaterial.

Weiters befaßt sich die Erfindung mit einer Dimensionierung der Ausnehmungen zwischen den Schneidsegmenten.

Stammblätter für Kreissägen werden nach dem Stand der Technik zumeist aus einem Werkstoff gemäß Stahl-Eisen-Liste Werkstoffnummer 1.2003 bzw. Stahlsortenkurzname 75 Cr 1 gefertigt. Dieser Werkstoff weist eine hohe Durchhärtbarkeit auf und ist durch eine entsprechende Wärmebehandlung auf Härtewerte bis 43HRC(±2) vergütbar, wobei für das Abschrecken des Bleches, aus dem die Stammblätter gefertigt werden, vorzugsweise die Quetten-Kühlung Verwendung findet. Die Forderungen an die Stammblätter sind dabei gute Löteigenschaft für die umfangseitig anzubringenden Schneidsegmente und hohe Stabilität der Blattgeometrie im praktischen Betrieb.

Für Steinsägen, zum Beispiel für die Bearbeitung von Marmor oder Granit, hat es sich als wichtig herausgestellt, dass die Sägeblätter mit einem Durchmesser von 1000 mm ∅ und größer bei einer Härte von etwa 43 HRC eine Dicke von 5,5 mm und mehr aufweisen müssen, um ausreichende Stabilität bezüglich des Rundlaufes bzw. eines achsialen Ausweichens oder Auswanderns der Schneidstellenzonen sicherzustellen. Die Stammblätter sind zumeist mit 10 bis 15 mm hohen, harten und verschleißfesten Schneidsegmenten aus Sinterwerkstoffen bestückt, die gewöhnlich eine Länge von 20 bis 30 mm aufweisen. Der Flugkreis der Schneisegmente soll bei der Sägearbeit gleichbleiben, um genaue Schnitte mit konstant geringer Breite im Stein ausführen zu können. Beim Schnitt treten im äußeren Bereich des Sägeblattes naturgemäß Erwärmungen auf, die zu einer wellenförmigen Verwerfung des umfangseitigen Bereiches des mit Schneidsegmenten bestückten Blattes führen und infolgedessen größere Schnittbreiten und höhere Lärmentwicklungen verursachen können. Aus diesem Grunde wird bei einer Herstellung von Hartsteinplatten vielfach, insbesondere bei Multidisc-Kreissägen mit bis zu 80 Blättern und mehr auf einer Spannachse, eine Bearbeitungstiefe von ca. 1 mm vorgesehen.

Diese Begrenzung in der Abarbeitung bzw. Einbringung des Sägespaltes wird vorgenommen, um die Verwerfung der Sägeblätter und ein eigenfrequenzbedingtes sogenanntes Verlaufen derselben im Material bei der Schnittbildung zu vermeiden.

Zur Aufrechterhaltung der Ebenflächigkeit im Leistungsbetrieb der Kreissägen kann weiters zwischen den mittels Lötung aufgebrachten Schneidsegmenten ein Stammblatt auch in der Regel tiefe Ausnehmungen besitzen, die einen Verzug desselben und dadurch ein Auswandern der schnitterzeugenden Sinterteile verhindern sollen. Die Schlitze haben dabei die Aufgabe, als Dehnfugen zu wirken. Derartige Ausnehmungen oder Schlitze können jedoch die Schneidsegmentpositionierung unter Belastung destabilisieren, wodurch letztlich eine vergrößerte Schnittbreite und/oder unebene Schnittoberflächen im Steinmaterial entstehen.

Um die Betriebseigenschaften einer Kreissäge nicht zu verschlechtern, wurde gemäß DE 19901208 A1 vorgeschlagen, getrennte äußere Umfangsschneidkantenabschnitte, die mit Befestigungseinrichtungen mit dem Kreissägeblatt verbunden sind, anzuwenden. Dieser Vorschlag könnte im Hinblick auf eine Verringerung des abgestrahlten Luftschallpegels vorteilhaft sein, jedoch ist der aufwendige Aufbau und die Einschränkung bezüglich der verwendbaren Schneidteile nachteilig und wenig wirtschaftlich.

Aus der DE 19801121 A bzw. der EP 931615 A ist ein Kreissägeblatt mit unterschiedlichen Sägeblattdicken bekannt geworden, welches Sägeblatt Seitenschneiden aufweist, um den abgestrahlten Luftschallpegel beim Schneideinsatz zu erniedrigen.

Zum verbesserten Austrag des Sägemehles und damit zur Verringerung der Reibungserwärmung des Sägeblattes wird nach EP 930122 A ein Sägeblatt vorgeschlagen, welches eine unterschiedliche, in sich gleiche Dicke aufweist, die durch ringförmige Abschrägungen ineinander übergeht.

Weiters ist aus der EP 819491 bekannt geworden, ein Stammblatt für Kreisssägeblätter mit einem versteiften Bereich und einer Vielzahl schmal geschlitzter Abschnitte, um den Geräuschpegel zu vermindern, vorzusehen, wobei die Abschnitte im äußeren ringförmigen Teil des Stammblattes angeordnet sind.

Die DD 290446 offenbart ein Kreissägeblatt in Verbundausführung für die Metallbearbeitung sowie ein Verfahren zur Herstellung des Werkstoff-Verbundes zwischen Stammblatt und aus der Flüssigphase aufkristallisiertem Schneidteil. Zur Schaffung einer festhaftenden, innigen Verbindung und zur Vermeidung von Diffusionsvorgängen zwischen dem Trägermaterial und der Schneidschicht ist eine CrNiFe-Zwischenschicht mit einer Dicke von 30 bis 50 µm durch Kondensation aufgebracht.

Ein mit umfangseitig angeordneten Zähnen aus Sinterwerkstoff versehenes Stammblatt ist aus der US 4979417 bekannt geworden. Zur weitgehenden Vermeidung von kritischen Vibrationen des Stammblattes ist vorgesehen, dieses von innen, also vom Spindelbereich nach außen zum Zahnbereich hin, stufenweise konzentrisch mit drei geringer werdenden Blattdicken auszuführen.

Dem Stand der Technik mit allen Vorschlägen zur Verbesserung der Gebrauchseigenschaften von Kreissägen haftet der Nachteil an, dass insbesondere in hartem Steinmaterial mit diesen Sägen breite Schnitte mit geringer Schnittleistung und hohem abgestrahlten Luftschallpegel erstellt werden.

Hier will die Erfindung Abhilfe schaffen und setzt sich zum Ziel, oben angeführte Mängel zu beseitigen und ein Stammblatt für Dünnschnitt-Kreissägen zu schaffen, welches eine erhöhte Wirtschaftlichkeit bei der Verwendung dieses Sägeblattes erbringt.

Eine weitere Aufgabe der Erfindung ist insbesondere darin zu sehen, dass der Flugkreis sämtlicher Schneidsegmente, auch bei hohen Belastungen der Kreissäge, in Drehachsrichtung keine wesentlichen Abweichungen erfährt.

Dieses Ziel wird bei einem Stammblatt aus einer Eisenbasislegierung der eingangs genannten Art dadurch errreicht, dass die Eisenbasislegierung Gehalte an in Gew.-% von

| | |
|---|---|
| Kohlenstoff | 0,5 bis 0,69 |
| Mangan | 0,85 bis 1,25 |
| Chrom | 0,45 bis 1,50 |
| Vanadin | 0,05 bis 0,25 |

Silizium sowie wahlweise Elemente der Gruppe 4,5 und 6 des Periodensystems bis zu einem Gesamtgewicht von 3 Gew.-% Rest Eisen und herstellungsbedingte Begleitelemente und Verunreinigungen aufweist.

Die Vorteile der durch die erfindungsgemäße legierungstechnische Maßnahme erzielten Gebrauchseigenschaften der Säge liegen insbesondere darin, dass die Werkstoffeigenschaften der Verwendung desselben vorteilhaft angepaßt sind. Die Legierung mit den gekennzeichneten Konzentrationen der Elemente ist besonders vorteilhaft, wie gefunden wurde, einsetzbar für Kreissägeblätter, weil einerseits eine erhöhte Materialfestigkeit in thermisch vergüteten Zustand mit hohem Streckgrenzenverhältnis erreicht werden kann und andererseits eine hohe Zähigkeit und ein wesentlich verbessertes Schwingungsverhalten bzw. eine Unterdrückung der Resonanzfrequenz gegeben sind. Dies könnte, obwohl die wissenschaftliche Beweisführung aussteht, mit Restaustenitanteilen im Mikrogefüge nach einer Wärmebehandlung im Zusammenhang stehen.

Besonders gute Gebrauchseigenschaften von dünnen Kreissägeblättem mit umfangseitiger Schneidsegmentbestückung sind erreichbar, wenn die Eisenbasislegierung Gehalte in Gew.-% von

| | |
|---|---|
| Kohlenstoff | 0,55 bis 0,65 |
| Silizium | 0,18 bis 0,40 |
| Mangan | 0,85 bis 1,15 |
| Chrom | 0,69 bis 1,38 |
| Vanadin | 0,08 bis 0,18 |

Rest Eisen sowie herstellungsbedingte Begleitelemente und Verunreinigungen aufweist.

Diese Legierungszusammensetzung in engen Grenzen ist, wie sich zeigte, als Stammblatt für diamantbestückte, kobaltgebundene, gesinterte Schneidsegmente besonders vorteilhaft einsetzbar, weil einerseits ein gutes Lötverhalten und andererseits eine günstige Materialverfestigung bei thermischer oder verformungstechnischer Behandlung des Blattmittelbereiches gegeben sind.

Die Gebrauchseigenschaften von Kreissägen, insbesondere für Granit und derartig harte Werkstoffe können weiter verbessert werden, wenn die Eisenbasislegierung mindestens ein Element der Gruppe 4 und Gruppe 5 des Periodensystens mit einer Gesamtkonzentration in Gew.-% von 0,05 bis 0,3 aufweist, wobei der Gesamtgehalt der Elemente der Gruppe 6 des Periodensystems 1,85 Gew.-% nicht übersteigt.

In günstiger Weise kann dabei vorgesehen sein, dass die Werkstoffhärte einen Wert von 45,5 HRC ± 2 übersteigt.

Ebenso erheblich ist der Vorteil, dass das Stammblatt bei einem Durchmesser von größer als 550 mm eine Dicke von kleiner als 4,5 mm aufweist. Dadurch sind wirtschaftliche Vorteile erreichbar, weil die Gesamtschnittiefe erhöht, die Schnittbreite im Material verkleinert und die Ausbeute an Schnitteilen vergrößert werden kann.

Hohe Stabilität des Stammblattes und damit hohe Sicherheit gegen ein Verlaufen des Schnittes bei geringen Schnittbreiten können erreicht werden, wenn zumindest ein Teil des Blattmittelbereiches vom achsnahen Einspannteil zur umfangseitigen segmentbestückten Zone hin im Querschnitt eine abnehmende, vorzugsweise eine radial linear abnehmende, Dicke aufweist.

Im Hinblick auf eine möglichst geringe Abstrahlung von Körperschall hat es sich als vorteilhaft herausgestellt, wenn zumindest eine Seitenfläche im Blattmittelbereich zwischen achsnahem Einspannteil und umfangseitig segmentbestückter Außenzone im Querschnitt konkav ausgebildet ist. Durch diese Ausführungsform kann auch der Austrag von abgespantem Material günstig beeinflußt werden.

Die weitere Aufgabe der Erfindung wird dadurch gelöst, dass zwischen den Schneidsegmenten Ausnehmungen bzw. Schlitze im Stammblatt mit einer Tiefe von mindestens $\frac{1}{100}$, höchstens jedoch von $\frac{1}{34}$ mal dem Stammblattradius eingebracht sind und der Ausnehmungsgrund jeweils konkav gerundet ausgebildet ist. Der Vorteil der erfindungsgemäßen Ausführungsform des Stammblattes ist darin zu sehen, dass trotz der geringen Schlitztiefe eine stabile Positionierung der Schneidsegmente im Hochleistungsbetrieb erhalten bleibt, obwohl von der Fachwelt auf Grund einer Erwärmung und daher Ausdehnung der Außenzone einer Scheibe aus einer Eisenbasislegierung ein Auswandern der Schneidsegmente angenommen wurde.

Wenn, wie gefunden wurde, die Tiefe der Ausnehmungen mindestens $\frac{1}{65}$, höchstens jedoch $\frac{1}{40}$ mal

den Stammblattradius beträgt, kann der Stabilisierungseffekt auf die schnitterzeugenden Segmente weiter erhöht und gegebenenfalls die Schnittbreite verringert und die Wirtschaftlichkeit einer Plattenherstellung erhöht werden.

Gemäß einer bevorzugten Ausführungsform der Erfindung ist vorgesehen, dass der Ausnehmungsgrund jeweils kreisrund gebildet ist, insbesondere dass die Ausnehmungen im wesentlichen die Form von Halbkreisen besitzen. Dadurch können einerseits eine Gefahr einer Rißinitiation in der Ausnehmung im Stammblatt durch Kerbwirkung wesentlich verringert und andererseits insbesondere eine Herstellung desselben günstig beeinflußt werden. Weiters wird dadurch die Möglichkeit geschaffen, eine besonders enge Bestükkung des Stammblattes mit Schneidsegmenten vorzusehen, was eine vergleichsweise hohe Sägeblattleistung bewirkt.

Wenn, wie auch erfindungsgemäß vorgesehen sein kann, das Stammblatt einen Radius von mindestens 290 mm aufweist, stellen sich die vorgenannten erfindungswesentlichen Maßnahmen als besonders wirkungsvoll dar.

Anhand einer Prinzipdarstellung soll die Erfindung weiter dargelegt werden.

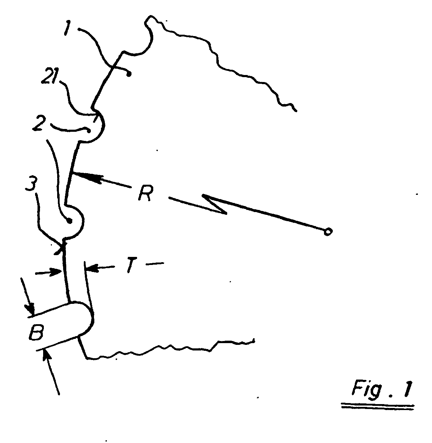

Es zeigt Fig. 1 ein erfindungsgemäßes Stammblatt.

Ein Stammblatt 1 gemäß Fig. 1 mit einem Radius R von 590 mm weist im Umfangbereich Ausnehmungen 2 bzw. Schlitze auf, die eine radiale Tiefe T von 10 mm besitzen. Einer bevorzugten Ausführungsform folgend ist der jeweilige Ausnehmungsgrund 21 kreisrund gebildet und die Ausnehmung 2 mit einer Breite von zweimal die Tiefe T hat im wesentlichen die Form eines Halbkreises. Zwischen den Ausnehmungen 2 am Stammblatt 1 ist ein Bereich 3 für eine Bestückung mit Schneidsegmenten gebildet, wobei erfindungsgemäß eine enge Bestükkung vorgenommen und eine hohe Schneidleistung der Säge erreicht werden kann.

Gegenüber einem Stammblatt mit Ausnehmungen mit einer Tiefe von 20 mm war bei einem solchen mit halbrunden Schlitzen mit einer Tiefe von 10 mm die achsiale Auslenkung der Schneidsegmente bei unterbrochenem Hochleistungsschnitt auf etwa 42 % reduziert und es konnte eine wesentlich erhöhte Schneidleistung mit derartig erfindungsgemäßen Sägen erzielt werden.

**Patentansprüche**

1. Stammblatt (1) für Dünnschnitt-Kreissägen zum Bearbeiten von nichtmetallischen Hartstoffen, insbesondere von Steinmaterial, aus einer Eisenbasislegierung mit guten Löteigenschaften, welches umfangseitig mit Schneidsegmenten bestückt ist und im Blattmittelbereich ein Verlaufen des Schnittes hindernde Spannungen aufweist, **dadurch gekennzeichnet, dass** die Eisenbasislegierung Ge

halte an in Gew.-% von

| Kohlenstoff | 0,5 bis 0,69 |
|---|---|
| Mangan | 0,85 bis 1,25 |
| Chrom | 0,45 bis 1,50 |
| Vanadin | 0,05 bis 0,25 |

Silizium sowie wahlweise Elemente der Gruppe 4,5 und 6 des Periodensystems bis zu einem Gesamtgewicht von 3 Gew.-%
Rest Eisen und herstellungsbedingte Begleitelemente und Verunreinigungen aufweist.

2. Stammblatt (1) nach Anspruch 1, **dadurch gekennzeichnet, dass** die Eisenbasislegierung Gehalte in Gew.-% von

| Kohlenstoff | 0,55 bis 0,65 |
|---|---|
| Silizium | 0,18 bis 0,40 |
| Mangan | 0,85 bis 1,15 |
| Chrom | 0,60 bis 1,38 |
| Vanadin | 0,08 bis 0,18 |

Rest Eisen sowie herstellungsbedingte Begleitelemente und Verunreinigungen aufweist.

3. Stammblatt (1) nach einem der Ansprüche 1 oder 2, **dadurch gekennzeichnet, dass** die Eisenbasislegierung mindestens ein Element der Gruppe 4 und Gruppe 5 des Periodensystems mit einer Gesamtkonzentration in Gew.-% von 0,05 bis 0,3 aufweist, wobei der Gesamtgehalt der Elemente der Gruppe 6 des Periodensystems 1,85 Gew.-% nicht übersteigt.

4. Stammblatt (1) nach einem der Ansprüche 1 bis 3, **dadurch gekennzeichnet, dass** die Werkstoffhärte einen Wert von 45,5 HRC ± 2 übersteigt.

5. Stammblatt (1) nach einem der Ansprüche 1 bis 4, **dadurch gekennzeichnet, dass** dieses bei einem Durchmesser von größer als 550 mm ⌀ eine Dicke von kleiner als 4,5 mm, vorzugsweise 4 mm und kleiner als 4 mm, aufweist.

6. Stammblatt (1) nach einem der Ansprüche 1 bis 4, **dadurch gekennzeichnet, dass** zumindest ein Teil des Blattbereiches vom achsnahen Einspannteil zur umfangseitigen segmentbestückten Zone hin im Querschnitt eine abnehmende, vorzugsweise eine radial linear abnehmende, Dicke aufweist.

7. Stammblatt (1) nach einem der Ansprüche 1 bis 4, **dadurch gekennzeichnet, dass** zumindest eine Seitenfläche im Blattmittelbereich zwischen achsnahem Einspannteil und umfangseitig segmentbe

stückter Außenzone im Querschnitt konkav ausgebildet ist.

8. Stammblatt (1) nach einem der Ansprüche 1 bis 7, **dadurch gekennzeichnet, dass** dieses Diamant enthaltende Sinter-Schneidsegmente trägt und insbesondere für ein Schneiden von Naturstein, zum Beispiel Granit, verwendet wird.

9. Stammblatt (1) nach einem der Ansprüche 1 bis 8, **dadurch gekennzeichnet, dass** die Spannungen im Blattbereich durch thermische und/oder mechanische Verformungsverfahren eingebracht sind.

10. Stammblatt (1) nach einem der Ansprüche 1 bis 9, **dadurch gekennzeichnet, dass** zwischen den Schneidsegmenten Ausnehmungen bzw. Schlitze (2) im Stammblatt (1) mit einer Tiefe (T) von mindestens $\frac{1}{100}$, höchstens jedoch $\frac{1}{34}$ mal dem Stammblattradius (R) eingebracht sind und der Ausnehmungsgrund (21) jeweils konkav gerundet ausgebildet ist.

$$\frac{1}{100}x\,R \leq T \leq \frac{1}{34}\,x\,R$$

11. Stammblatt (1) nach Anspruch 10, **dadurch gekennzeichnet, dass** die Tiefe (T) der Ausnehmungen mindestens $\frac{1}{65}$ höchstens jedoch $\frac{1}{40}$ mal dem Stammblattradius (R) beträgt.

$$\frac{1}{64}x\,R \leq T \leq \frac{1}{40}\,x\,R$$

12. Stammblatt (1) nach Anspruch 10 oder 11, **dadurch gekennzeichnet, dass** der Ausnehmungsgrund (21) jeweils kreisrund gebildet ist, insbesondere dass die Ausnehmungen im Wesentlichen die Form von Halbkreisen besitzen.

13. Stammblatt (1) nach Anspruch 10 bis 12, **dadurch gekennzeichnet, dass** das Stammblatt (1) einen Radius (R) von mindestens 290 mm aufweist.

**Claims**

1. Blade body (1) for thin circular saws for machining non-metal hard material, particularly stone material, of an alloy based on iron having good soldering properties, said body being provided with cutting segments at its periphery and comprising strains in the centre region of the blade body which impede a drift of the cutting, **characterised in that** said alloy based on iron comprises the following contents in percent by weight

| Carbon | 0.5 to 0.69 |
|---|---|
| manganese | 0.85 to 1.25 |
| chromium | 0.45 to 1.50 |
| vanadium | 0.05 to 0.25 |

silicon as well as optionally elements of the group 4, 5 and 6 of the periodic system up to a total weight of 3 percent by weight
the remainder being iron and metalloids and impurities conditional due to production.

2. Blade body (1) according to claim 1, **characterised in that** said alloy based on iron comprises the following contents in percent by weight

| Carbon | 0.55 to 0.65 |
|---|---|
| silicon | 0.18 to 0.40 |
| manganese | 0.85 to 1.15 |
| chromium | 0.60 to 1.38 |
| vanadium | 0.08 to 0.18 |

the remainder being iron and metalloids and impurities conditional due to production.

3. Blade body (1) according to claim 1 or 2, **characterised in that** said alloy based on iron comprises at least one element of group 4 and group 5 of the periodic system in a total concentration in percent by weight of 0.05 to 0.3, the total contents of the elements of group 6 of the periodic system not exceeding 1.85 percent by weight.

4. Blade body (1) according to any of claims 1 to 3, **characterised in that** the hardness of material exceeds a value of 45.5 HRC $\pm$ 2.

5. Blade body (1) according to any of claims 1 to 4, **characterised in that**, with a diameter of more than 550 mm $\varnothing$, it has a thickness of less than 4.5 mm, preferably 4 mm and smaller than 4 mm.

6. Blade body (1) according to any of claims 1 to 4, **characterised in that** at least part of the blade region, from the par-axis chucking portion towards the peripheral zone provided with segments, is decreasing in cross-sectional thickness, wherein it decreases preferably linearly in radial direction.

7. Blade body (1) according to any of claims 1 to 4, **characterised in that** at least one lateral surface has a concave cross-section in a median region of the blade body between the par-axis chucking portion and the outer zone provided with segments at its periphery.

8. Blade body (1) according to any of claims 1 to 7, **characterised in that** it supports sintered cutting segments containing diamond material, and is particularly used for cutting natural stone, for example granite.

9. Blade body (1) according to any of claims 1 to 8, **characterised in that** the strains in the region of the blade are introduced by a thermal and/or mechanic forming process.

10. Blade body (1) according to any of claims 1 to 9, **characterised in that** between the cutting segments, recesses and/or slots (2) have been made in the blade body (1) having a depth (T) of at least 1/100, but in maximum 1/34 times the blade body's radius (R), each recess bottom (21) being rounded in a concave fashion.

$$1/100 \times R \leq T \leq 1/34 \times R$$

11. Blade body (1) according to claim 10, **characterised in that** the depth (T) of the recesses amounts to at least 1/65, but in maximum to 1/40 times the blade body's radius (R).

$$1/64 \times R \leq T \leq 1/40 \times R$$

12. Blade body (1) according to claim 10 or 11, **characterised in that** each recess bottom (21) is circular, particularly in a manner that said recesses have substantially the shape of semicircles.

13. Blade body (1) according to any of claims 10 to 12, **characterised in that** said blade body (1) has a radius (R) of at least 290 mm.

## Revendications

1. Corps de lame (1 ) pour scies circulaires minces pour travailler des matériaux dures non-métalliques, particulièrement des matériaux de pierre, formé d'un alliage à base de fer ayant des bonnes qualités de brasage, qui est prévu à son périmètre des segments tranchants, et qui comprend dans la zone médiane de la lame des tensions, qui empêchent un gauchissement de la coupe, **caractérisé en ce que** l'alliage à base de fer comprends des contenus en % en poids de

| | |
|---|---|
| charbon | de 0,5 à 0,69 |
| manganèse | de 0,85 à 1,25 |
| chrome | de 0,45 à 1,50 |
| vanadium | de 0.05 à 0.25 |

silicium ainsi que, facultativement, des éléments de la groupe 4, 5 et 6 de la classification périodique des éléments jusqu'à un poids total de 3 % en poids le reste étant de fer et des éléments d'accompagnement et des impuretés conditionné dus à la production.

2. Corps de lame (1) selon la revendication 1, **caractérisé en ce que** l'alliage à base de fer comprends des contenus en % en poids de

| | |
|---|---|
| charbon | de 0,55 à 0,65 |
| silicium | de 0,18 à 0,40 |
| manganèse | de 0,85 à 1,15 |
| chrome | de 0,60 à 1,38 |
| vanadium | de 0.08 à 0.18 |

le reste étant de fer et des éléments d'accompagnement et des impuretés conditionné dus à la production.

3. Corps de lame (1) selon la revendication 1 ou 2, **caractérisé en ce que** l'alliage à base de fer comprends au moins un élément de la groupe 4 et de la groupe 5 de la classification périodique des éléments ayant une concentration totale en % en poids de 0.05 à 0,3, le contenu total des éléments de la groupe 6 de la classification périodique des éléments ne surmontant pas 1,85 % en poids.

4. Corps de lame (1) selon une quelconque des revendications 1 à 3, **caractérisé en ce que** la dureté de matière surpasse un valeur de 45,5 HRC $\pm$ 2.

5. Corps de lame (1) selon une quelconque des revendications 1 à 4, **caractérisé en ce qu'**il comprend, avec un diamètre plus grand que 55 mm $\varnothing$, une épaisseur plus petite que 4,5 mm, préférablement 4 mm et plus petite que 4 mm.

6. Corps de lame (1) selon une quelconque des revendications 1 à 4, **caractérisé en ce qu'**au moins part de la zone de lame, vue de la partie de serrage près de l'axe vers la zone périphérique munie des segments, comprend une épaisseur en coupe transversale diminuante, préférablement diminuante linéairement en direction radiale.

7. Corps de lame (1) selon une quelconque des revendications 1 à 4, **caractérisé en ce qu'**au moins une surface latérale dans la zone médiane de la lame, entre la partie de serrage près de l'axe et la zone extérieure munie des segments à sa périphérie, est formée de façon concave en coupe transversale.

8. Corps de lame (1) selon une quelconque des revendications 1 à 7, **caractérisé en ce qu'**il porte des segments de coupure frittés contenant du diamant, et qu'il est utilisé particulièrement pour couper le pierre naturel, par exemple le granite.

9.  Corps de lame (1) selon une quelconque des revendications 1 à 8, **caractérisé en ce que** les tensions dans la zone de la lame sont introduites par un procédé de formage thermique et/ou mécanique.

10. Corps de lame (1) selon une quelconque des revendications 1 à 9, **caractérisé en ce que** des creux et/ou des fentes (2) sont introduits dans le corps de lame (1 ) entre les segments de coupure, ayant une profondeur (T) d'au moins 1/100, mais en maximum 1/34 fois le radius du corps de lame (R), et que chaque fond des creux (21) est arrondit de façon concave.

$$1/100 \text{ x } R \leq T \leq 1/34 \text{ x } R$$

11. Corps de lame (1) selon la revendication 10, **caractérisé en ce que** la profondeur (T) des creux se monte au moins à 1/65, mais en maximum 1/40 fois le radius (R) du corps de lame.

$$1/64 \text{ x } R \leq T \leq 1/40 \text{ x } R$$

12. Corps de lame (1) selon la revendication 10 ou 11, **caractérisé en ce que** chaque fond des creux (21) est formé de manière circulaire, et qu'en particulier les creux ont essentiellement la forme des demi-cercles.

13. Corps de lame (1) selon une quelconque des revendications 10 à 12, **caractérisé en ce que** le corps de lame (1) comprend un radius (R) d'au moins 290 mm.

*Fig . 1*